# EUROPÄISCHE PATENTSCHRIFT

(11) **EP 3 336 347 B1**
(45) Veröffentlichungstag und Bekanntmachung des Hinweises auf die Patenterteilung: **18.09.2019**
(21) Anmeldenummer: 17204272.3
(22) Anmeldetag: 29.11.2017
(51) Int. Cl.: F03D 7/02

(54) **VORRICHTUNG ZUR BLATTWINKELEINSTELLUNG VON ROTORBLÄTTERN EINER WINDENERGIEANLAGE**
DEVICE FOR BLADE PITCH ADJUSTMENT OF ROTOR BLADES OF A WIND ENERGY INSTALLATION
DISPOSITIF DE RÉGLAGE D'ANGLE DE PALES DE ROTOR D'UNE ÉOLIENNE

(30) Priorität: 13.12.2016 DE 102016014742
(43) Veröffentlichungstag der Anmeldung: 20.06.2018
(73) Patentinhaber: Senvion GmbH, 22297 Hamburg (DE)
(72) Erfinder: dos Santos, Jose Pedro, 4485-513 Mindelo/VDC (PT)
(74) Vertreter: Glawe, Delfs, Moll

(56) Entgegenhaltungen:
- EP-A2- 2 290 235
- WO-A1-2016/101961
- WO-A2-2012/000505
- US-A1- 2011 142 593

## Beschreibung

Die Erfindung betrifft eine Vorrichtung zur Blattwinkeleinstellung von Rotorblättern einer Windenergieanlage sowie ein entsprechendes Verfahren, wie z.B. aus WO 2016/101961 bekannt ist.

Typische Windenergieanlagen umfassen einen Rotor, der drehbar an einer Gondel angeordnet ist, wobei die Gondel wiederum drehbar auf einem Turm angeordnet ist.

Der Rotor treibt ggf. über eine Rotorwelle und ein Getriebe einen Generator an. Eine durch Wind induzierte Rotationsbewegung des Rotors kann so in elektrische Energie gewandelt werden, die dann über Umrichter und/oder Transformatoren - je nach Bauart des Generators auch wenigstens teilweise direkt - in ein elektrisches Netz eingespeist werden kann.

Der Rotor umfasst dabei mehrere - in der Regel drei - Rotor-blätter, die zur Einstellung des Blattanstellwinkels drehbar an einer Rotornabe befestigt sind. Dazu ist zwischen einem Rotorblatt und der Rotornabe ein Blattwinkellager vorgesehen, um dessen Achse das Rotorblatt mit Hilfe eines Blattverstellantriebs gedreht werden kann.

Die Regelung des Blattanstellwinkels und die Steuerung des Blattverstellantriebs erfolgt regelmäßig anhand einer Ermittlung des aktuellen Blattanstellwinkels auf Basis von vorangegangenen Änderungen des Blattanstellwinkels ausgehend von einer Ausgangswinkelposition. Während sich die Änderungen des Blattanstellwinkels durch den Blattverstellantrieb oder äußere, auf das Rotorblatt einwirkenden (Wind-)Kräfte ausreichend genau messen lässt, muss die Ausgangswinkelposition regelmäßig manuell eingestellt werden. Auch wenn sich bei einer in Betrieb befindlichen Windenergieanlage das Erreichen einzelner Blattanstellwinkel - bspw. für die Fahnenposition - durch Endschalter o.ä. überprüfen lassen, ist für eine genaue Kalibrierung eben dieser Endschalter zuvor eine genaue manuelle Einstellung der Ausgangswinkelposition erforderlich. Eine ungenaue Einstellung der Ausgangswinkelposition führt zu einem dauerhaft von dem Soll-Anstellwinkel abweichenden Ist-Anstellwinkel eines Rotorblatts, was Leistungsverluste und unerwünschte Schwingungen während des Betriebs der Windenergieanlage zur Folge haben kann.

Es ist bekannt, für die manuelle Einstellung der Ausgangswinkelposition sog. Blattlehren zu verwenden. Diese Blattlehren werden an einer vorgegebenen Position am mit der Rotornabe verbundenen Teil des Blattwinkellagers befestigt und ragen in Richtung des Rotorblatts. Am Rotorblatt selbst ist eine Markierung vorgesehen. Zur Einstellung der Ausgangswinkelposition wird das Rotorblatt dann so verfahren, dass die Markierung am Rotorblatt mit der Blattlehre fluchtet. Bei der Markierung handelt es sich häufig um eine sog. 0°-Markierung, welche bei Erreichen der Blattlehre die 0°-Stellung des Rotorblatts angibt.

Nachteilig an diesem Stand der Technik ist, dass die Blattlehren unhandlich sind, weshalb eine Blattwinkeleinstellung häufig zwei Monteure erfordert. Aufgrund der Größe der Blattlehren kommt es auch häufig zu Beschädigungen, bspw. durch Verbiegen, die eine genaue Einstellung der Ausgangswinkelposition unmöglich machen. Nicht zuletzt müssen regelmäßig auch für unterschiedliche Windenergieanlagentypen unterschiedliche Blattlehren verwendet werden, womit ständig eine Vielzahl von unterschiedlichen Blattlehren vorgehalten werden muss.

Da bei modernen Windenergieanlagen im Bereich des Blattwinkellagers eine Vielzahl von Komponenten angeordnet ist, müssen regelmäßig vor der Verwendung einer Blattlehre um Platz zu schaffen zunächst einzelne Komponenten, bspw. Fettauffangbehälter oder Fettbehältergehäuse, demontiert und nach erfolgter Einstellung der Ausgangswinkelposition wieder montiert werden. Der Zeitaufwand für die Blattwinkeleinstellung ist in einem solchen Fall erheblich.

Schlussendlich hat sich außerdem gezeigt, dass die Einstellung der Ausgangswinkelposition mit dem aus dem Stand der Technik bekannten Verfahren unter Zuhilfenahme einer Blattlehre häufig nicht präzise genug ist. Selbst wenn die Blattlehre nicht beschädigt oder verbogen ist, muss die Markierung am Rotorblatt über die Blattlehre mit Augenmaß angepeilt werden, wobei das letztendliche Ergebnis der Blatteinstellung je nach Monteur erfahrungsgemäß variiert. Selbst die Ergebnisse mehrerer Blatteinstellungen von ein und demselben Monteur können teilweise erheblich variieren.

Der Erfindung liegt die Aufgabe zugrunde, eine Vorrichtung zur Blattwinkeleinstellung von Rotorblättern einer Windenergieanlage sowie ein Verfahren zur Blattwinkeleinstellung von Rotorblättern einer Windenergieanlage zu schaffen, bei denen die aus dem Stand der Technik bekannten Nachteile nicht mehr oder nur noch in vermindertem Umfang auftreten.

Gelöst wird diese Aufgabe durch eine Vorrichtung gemäß dem Hauptanspruch, sowie ein Verfahren gemäß dem nebengeordneten Anspruch 6. Vorteilhafte Weiterbildungen sind Gegenstand der abhängigen Ansprüche.

Demnach betrifft die Erfindung eine Vorrichtung zur Blattwinkeleinstellung der Rotorblätter einer Windenergieanlage umfassend zwei voneinander beabstandeten Auflager zum Anlegen der Vorrichtung an eine Schalenfläche des Blattwinkellagers eines Rotorblattes oder einer damit verbundenen Komponente, sodass die Verbindungslinie zwischen den beiden Auflagern eine in einer Ebene senkrecht zur Achse des Blattwinkellagers liegende Sekante der Schalenfläche bildet, und einen Laser zum Aussenden eines sichtbaren Laserstrahls senkrecht zur Achse des Blattwinkellagers, dessen Strahlachse mittig und im senkrechten Winkel zur Verbindungslinie zwischen den beiden Auflagern verläuft.

Weiterhin betrifft die Erfindung ein Verfahren zur Blattwinkeleinstellung eines Rotorblatts einer Windenergieanlage mit einer erfindungsgemäßen Vorrichtung, mit den Schritten:
a) Anlegen einer Vorrichtung mit ihren Auflagern an einer Schalenfläche des Blattwinkellagers des Rotorblattes oder einer damit verbundenen Komponente an einer vorgegebenen Position oder derart, dass ein von der Vorrichtung ausgehender Laserstrahl auf eine Nabenmarkierung im Bereich der der Vorrichtung gegenüberliegenden Seite des Blattwinkellagers trifft;
b) Befestigen der Vorrichtung in der vorgegebenen oder gefundenen Position; und
c) Verfahren des Rotorblatts, bis der Laserstrahl auf eine Rotorblattmarkierung auf dem Rotorblatt trifft.

Zunächst werden einige in Zusammenhang mit der Erfindung verwendete Begriffe erläutert.

Mit "Schalenfläche des Blattwinkellagers" ist eine in der Regel einfach gekrümmte Fläche am Blattwinkellager bezeichnet, die konzentrisch mit der Achse des Lagers angeordnet und vorzugsweise vollständig umlaufend ist. Bspw. kann es sich bei der Schalenfläche um die Innenfläche des Innenrings oder um seitliche, von außen zugängliche Bereiche der dem Innenring zugewandten Fläche des Außenrings handeln. Die Schalenfläche kann auch durch mit dem eigentlichen Lager (vorzugsweise unmittelbar) verbundenen Komponenten des Blattwinkellagers, bspw. einem Auflager o.ä., gebildet sein.

Mit "Sekante zu einer Schalenfläche des Blattwinkellagers" ist eine in einer Ebene senkrecht zur Achse des Blattwinkellagers verlaufende Gerade bezeichnet, mit der die beiden Punkte der Schalenfläche, an denen die Auflager der Vorrichtung aufliegen, verbunden sind.

Mit "sichtbarem Laserstrahl" ist ein Laserstrahl mit einer Wellenlänge im für das menschliche Auge sichtbaren Bereich bezeichnet.

Wird die erfindungsgemäße Vorrichtung mit ihren Auflagern auf einer Schalenfläche des Blattwinkellagers oder einer damit verbundenen Komponente angeordnet, verläuft der Laserstrahl aufgrund der erfindungsgemäßen Anordnung des Lasers in der Vorrichtung sowie der Kreisform des Blattwinkellagers durch die Drehachse eben dieses Lagers bis zur gegenüberliegenden Seite des Blattwinkellagers und dem damit verbundenen Rotorblatt. Der Laserstrahl kann dann zur Einstellung des Blattwinkels bzw. dessen Ausgangswinkelposition genutzt werden, bspw. indem das Rotorblatt solange verfahren wird, bis der Laserstrahl auf eine vorgegebene gegenüber dem Rotorblatt ortsfeste Markierung, bspw. eine 0°-Markierung, auftrifft. Diese Rotorblattmarkierung kann unmittelbar am Rotorblatt oder - je nach Ausgestaltung des Blattwinkellagers - auch auf dem Blattwinkellager selbst angeordnet sein. Ein fehleranfälliges Anpeilen der Rotorblattmarkierung, wie aus dem Stand der Technik bekannt, entfällt dabei.

Um sicherzustellen, dass ein über den Laserstrahl eingestellter Blattanstellwinkel tatsächlich auch dem gewünschten Blattanstellwinkel entspricht, ist es erforderlich, dass die erfindungsgemäße Vorrichtung zuvor in der richtigen Position an dem Blattwinkellager angeordnet wurde. Dazu ist es insbesondere bei neuen Windenergieanlagen möglich, an dem Blattwinkellager Markierungen oder besondere Aufnahmen, bspw. Vertiefungen, für die Auflager der Vorrichtung vorzusehen, über welche die Vorrichtung dann unmittelbar korrekt positioniert werden kann.

Insbesondere bei der der Verwendung der erfindungsgemäßen Vorrichtung in bereits existierenden Windenergieanlagen, deren Blatteinstellwinkel zuvor mit Hilfe einer Blattlehre eingestellt wurde, ist es auch möglich, die Vorrichtung mit Hilfe des Laserstrahls selbst zu positionieren. Dazu wird die Position der Vorrichtung entlang der Schalenfläche des Blattwinkellagers oder einer damit verbundenen Komponente solange verändert, bis der Laserstrahl - der, wie bereits beschrieben, aufgrund der Ausgestaltung der Vorrichtung durch die Drehachse des Blattwinkellagers verläuft - auf eine gegenüber der Rotornabe ortsfeste Markierung, bspw. eine 0°-Markierung, im Bereich des Blattwinkellagers - also bspw. am Blattwinkellager selbst oder am Gusskörper der Rotornabe - auftrifft. Eine entsprechende Nabenmarkierung ist bei bestehenden Windenergieanlagen als Hilfe für die Positionierung von Blattlehren grundsätzlich vorhanden.

Es ist bevorzugt, wenn der Laser ein Linienlaser ist. Die die Ausdehnung der vom Laser erzeugten Linie verläuft dabei vorzugsweise senkrecht sowohl zur Verbindungslinie zwischen den beiden Auflagern als auch zur Strahlachse des Lasers. Durch die Verwendung eines entsprechenden Linienlasers ist es möglich, dass der Laserstrahl gleichzeitig sowohl auf eine Nabenmarkierung als auch auf eine Rotorblattmarkierung auftrifft, wodurch eine genaue Blattwinkeleinstellung bei gleichzeitiger Überprüfung der korrekten Positionierung der erfindungsgemäßen Vorrichtung möglich ist. Alternativ zu einem Linienlaser kann auch ein Punktlaser vorgesehen sein. In diesem Fall ist es bevorzugt, wenn der Punktlaser um eine Achse parallel zur Verbindungslinie der beiden Auflager schwenkbar ist, damit der Laserstrahl wahlweise auf eine Nabenmarkierung oder eine Rotorblattmarkierung gerichtet werden kann.

Es ist bevorzugt, wenn die Vorrichtung eine Magnethalterung umfasst, mit der die Vorrichtung lösbar am Blattwinkellager befestigt werden kann. Das Blattwinkellager ist regelmäßig zumindest zu großen Teilen aus Metall gefertigt, sodass über eine Magnethalterung die Vorrichtung an dem Blattwinkellager sicher in Position gehalten werden kann.

Vorzugsweise umfasst die Vorrichtung eine Batterie zur Versorgung des Lasers mit elektrischer Energie. Weiter vor-zugsweise ist die Batterie wiederaufladbar. Verfügt die Vor-richtung über eine entsprechende Batterie, kann auf eine externe Stromzuführung zum Laser, bspw. über ein Kabel, verzichtet werden, wodurch die Handhabung der Vorrichtung vereinfacht wird.

Die Auflager, der Laser und ggf. ein Fach zur Aufnahme der Batterie sind vorzugsweise in bzw. an einem Gehäuse, vorzugsweise aus Kunststoff, angeordnet. Die Auflager können bspw. durch an dem Gehäuse angeordnete Stifte, Bolzen oder Schrauben gebildet sein. Durch geeignete Wahl des Kunststoffs kann die Vorrichtung einerseits leicht, andererseits ausreichend steif und robust ausgeführt werden. Die Vorrichtung kann bspw. die Maße 20 cm x 4 cm x 5 cm aufweisen, wobei für die vorstehenden Kantenlängen eine Varianz von ± 1 cm, vorzugsweise von ± 0,5 cm vorgesehen sein kann. Damit ist die Vorrichtung ausreichend klein, um von einem Monteur problemlos mitgeführt zu werden.

Zur Erläuterung des erfindungsgemäßen Verfahrens wird auf die vorstehenden Ausführungen verwiesen. Das Verfahren bietet gegenüber dem Stand der Technik den Vorteil, dass die Einstellung des Blattanstellwinkels deutlich präziser erfolgen kann als bei Verwendung einer Blattlehre. Auch kann die Einstellung ohne weiteres durch einen einzelnen Monteur durchgeführt werden. Da weiterhin auf eine aufwendige Montage einer Blattlehre mit ggf. erforderlicher vorangehender Demontage anderer Bauteile verzichtet werden kann, lässt sich häufig auch eine Zeitersparnis für die Blattwinkeleinstellung erreichen.

Die Erfindung wird nun anhand einer vorteilhaften Ausführungsform unter Bezugnahme auf die beigefügten Zeichnungen beispielhaft beschrieben. Es zeigen:
- Figur 1:: ein erstes Ausführungsbeispiel einer erfindungsgemäßen Vorrichtung zur Blattwinkeleinstellung eines Rotorblatts einer Windenergieanlage; und
- Figur 2:: eine beispielhafte Verwendung der Vorrichtung aus Figur 1.

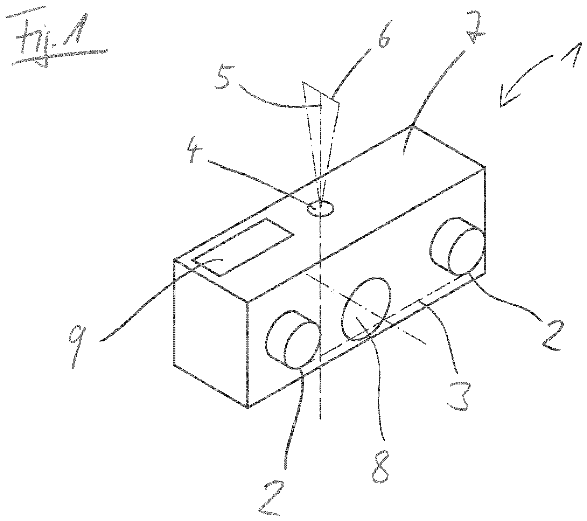

In Figur 1 ist eine erfindungsgemäße Vorrichtung 1 zur Blattwinkeleinstellung eines Rotorblatts einer Windenergieanlage gezeigt.

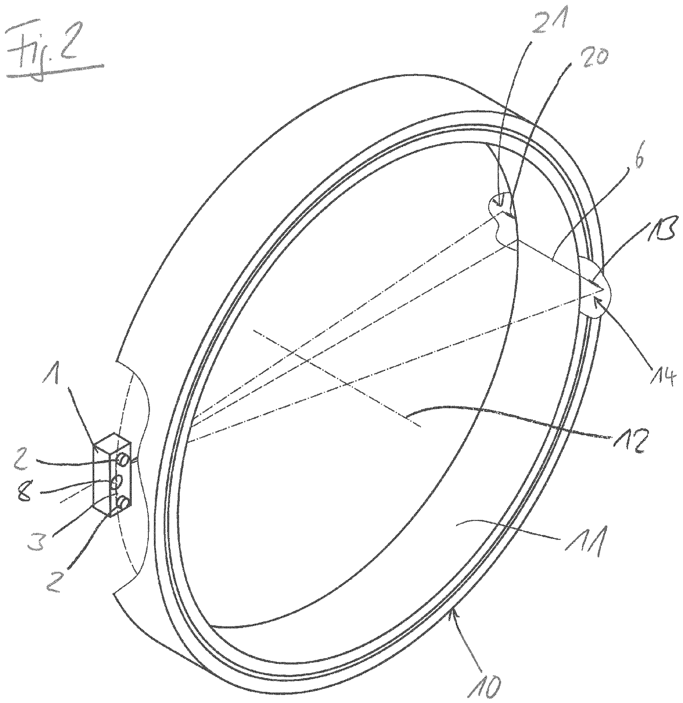

Die Vorrichtung 1 umfasst zwei voneinander beabstandete Auflager 2, mit denen die Vorrichtung an einer Schalenfläche 11 eines Blattwinkellagers 10 (vgl. Figur 2) angelegt werden kann. Die Punkte, mit denen die Auflager 2 an der Schalenfläche 11 des Blattwinkellagers 10 letztendlich anliegen, lassen sich durch die in Figur 1 angedeutete Linie 3 miteinander verbinden.

Die Vorrichtung 1 umfasst weiterhin einen Laser 4 zum Aussenden eines sichtbaren Laserstrahls entlang der Strahlachse 5. Die Strahlachse 5 ist dabei derart mittig zwischen den beiden Auflagern 2, senkrecht zur Verbindungslinie 3 angeordnet, dass die Strahlachse 5 bei der Verwendung der Vorrichtung 1 senkrecht zur Schalenfläche 11 des Blattwinkellagers 10 verläuft. Der Laser 4 ist ein Linienlaser, wobei die Ausdehnung der vom Laser 4 abgegebenen Linie 6 senkrecht sowohl zur Strahlachse 5 als auch zur Verbindungslinie 3 verläuft. Dadurch ist sicher-gestellt, dass bei ordnungsgemäßer Verwendung der Vorrichtung die Ausdehnung des Laserstrahls parallel zur Achse 12 des Blattwinkellagers 10 verläuft.

Sowohl die Auflager 2 als auch der Laser 4 sind an bzw. in einem Gehäuse 7 aus Kunststoff mit den Abmaßen 20 cm x 4 cm x 5 cm angeordnet. Die Auflager 2 sind dabei als zwei an dem Gehäuse 7 angeordnete Stifte ausgebildet. Das Gehäuse 7 umfasst weiterhin eine Magnethalterung 8 sowie ein Batteriefach 9. Die Magnethalterung 8 ist so angeordnet, dass bei der ordnungsgemäßen Anordnung der Vorrichtung 7 an einem Blattwinkellager 10, die Magnethalterung 8 in Kontakt mit einem metallischen Bestandteil des Blattwinkellager 10 kommt und die Vorrichtung 1 so lösbar an dem Blattwinkellager 10 befestigt wird. Das Batteriefach 9 ist zur Aufnahme einer Batterie oder eines Akkumulators zur Versorgung des Lasers 4 mit elektrischer Energie vorgesehen.

In Figur 2 ist die Verwendung der Vorrichtung 1 aus Figur 1 illustriert. In Figur 2 ist zunächst schematisch ein Blattwinkellager 10 dargestellt, welches ein Rotorblatt einer Windenergieanlage derart mit der Rotornabe verbindet, dass durch Drehung um die Achse 12 des Blattwinkellagers 10 der Anstellwinkel des Rotorblatts verändert werden kann. Das Blattwinkellager 10 ist ein Wälzlager mit einem Außen- und einem Innenring, wobei u.a. die Innenseite des Innenrings eine Schalenfläche 12 bildet, die einfach gekrümmt ist und konzentrisch um die Achse 12 des Blattwinkellagers 10 verläuft.

Die Vorrichtung 1 ist mit Ihren Auflagern 2 derart an der Schalenfläche 11 des Blattwinkellagers 10 bzw. deren Kante angeordnet, dass die Verbindungslinie 3 zwischen den beiden Auflagern 2 in einer Ebene senkrecht zur Achse 12 eine Sekante zur Schalenfläche 11 bildet. Aufgrund der vorbeschriebenen Anordnung des Lasers 4 an der Vorrichtung 1 (vgl. Ausführungen zu Figur 1) und der Form der Schalenfläche 11 ist sichergestellt, dass die Strahlachse 5 des Laserstrahls durch die Achse 12 des Blattwinkellagers 10 verläuft, wobei die Ausdehnung der vom Laser 4 abgegebenen Linie 6 parallel zu dieser Achse 12 liegt.

Die Vorrichtung 1 ist derart an der Schalenfläche 11 des Blattwinkellagers 10 angeordnet, dass die von dem Laser 4 erzeugte Linie 6 auf eine 0°-Nabenmarkierung 13 auf dem mit dem die Schalenfläche 11 des Blattwinkellagers 10 verbundenen Gusskörper 14 der Rotornabe auftrifft. Die Vorrichtung 1 wird durch die Magnethalterung 8, die mit dem Innenring des Blattwinkellagers 10 magnetisch zusammenwirkt, in dieser Position gehalten.

Anschließend wird das Rotorblatt so verfahren, dass die Linie 6 des Lasers 4 auch auf eine 0°-Rotorblattmarkierung 20 auftrifft, die an der Innenseite des Rotorblattes (angedeutet bei 21) angeordnet ist. Trifft die Linie 6 des Lasers 4 gleichzeitig auf beide 0°-Markierungen 13, 20 auf, befindet sich das Rotorblatt präzise in der 0°-Stellung. Die Position kann dann als Ausgangswinkelposition in der Steuerung für den Anstellwinkel des Rotorblattes hinterlegt werden.

## Patentansprüche

1. Vorrichtung (1) zur Blattwinkeleinstellung der Rotorblätter einer Windenergieanlage umfassend
- zwei voneinander beabstandeten Auflager (2) zum Anlegen der Vorrichtung (1) an eine Schalenfläche (11) des Blattwinkellagers (10) eines Rotorblattes oder einer damit verbundenen Komponente, sodass die Verbindungslinie (3) zwischen den beiden Auflagern (2) eine in einer Ebene senkrecht zur Achse (12) des Blattwinkellagers (10) liegende Sekante der Schalenfläche (11) bildet, und
- einen Laser (4) zum Aussenden eines sichtbaren Laserstrahls senkrecht zur Achse (12) des Blattwinkellagers (10), dessen Strahlachse (5) mittig und im senkrechten Winkel zur Verbindungslinie (3) zwischen den beiden Auflagern (2) verläuft.

2. Vorrichtung nach einem der vorhergehenden Ansprüche,
**dadurch gekennzeichnet, dass**
der Laser (4) ein Linienlaser ist, wobei die Ausdehnung der vom Laser (4) erzeugten Linie (6) vorzugsweise senkrecht zur Verbindungslinie (3) zwischen den beiden Auflagern (2) und senkrecht zur Strahlachse (5) des Lasers (4) liegt.

3. Vorrichtung nach Anspruch 1,
**dadurch gekennzeichnet, dass**
eine Magnethalterung (8) vorgesehen ist, um die Vorrichtung lösbar am Blattwinkellager (10) zu befestigen.

4. Vorrichtung nach einem der vorhergehenden Ansprüche,
**dadurch gekennzeichnet, dass**
die Vorrichtung eine Batterie, vorzugsweise eine wieder aufladbare Batterie, zur Versorgung des Lasers (4) mit elektrischer Energie umfasst.

5. Vorrichtung nach einem der vorhergehenden Ansprüche,
**dadurch gekennzeichnet, dass**
die Auflager (2), der Laser (4) und/oder ein Fach (9) zur Aufnahme der Batterie in oder an einem Gehäuse (7), vorzugsweise aus Kunststoff, angeordnet sind.

6. Verfahren zur Blattwinkeleinstellung eines Rotorblatts einer Windenergieanlage mit einer Vorrichtung (1) gemäß einem der vorhergehenden Ansprüche, mit den Schritten:
a) Anlegen einer Vorrichtung (1) mit ihren Auflagern (2) an einer Schalenfläche (11) des Blattwinkellagers (10) des Rotorblattes oder einer damit verbundenen Komponente an einer vorgegebenen Position oder derart, dass ein von der Vorrichtung (1) ausgehender Laserstrahl auf eine Nabenmarkierung (13) im Bereich der der Vorrichtung (1) gegenüberliegenden Seite des Blattwinkellagers (10) trifft;
b) Befestigen der Vorrichtung (1) in der vorgegebenen oder gefundenen Position; und
c) Verfahren des Rotorblatts, bis der Laserstrahl auf eine Rotorblattmarkierung (20) auf dem Rotorblatt trifft.

7. Verfahren nach Anspruch 6,
**dadurch gekennzeichnet, dass**
die Nabenmarkierung (13)und die Rotorblattmarkierung (20) eine 0°-Markierung ist.

8. Verwendung einer Vorrichtung nach einem der Ansprüche 1 bis 5 in einem Verfahren gemäß einem der Ansprüche 6 bis 7.

## Claims

1. Device (1) for blade pitch adjustment of rotor blades of a wind energy installation, comprising:
- two supports (2) spaced apart from each other for attaching the device (1) to a shell surface (11) of the blade angle bearing (10) and a rotor blade or a component connected thereto, so that the connecting line (3) between the two supports (2) forms a secant, lying in a plane at right angles to the axis (12) of the blade angle bearing (10), to the shell surface (11), and
- a laser (4) for transmitting a visible laser beam at right angles to the axis (12) of the blade angle bearing (10), the beam axis (5) of which extends centrally and at the right angle to the connecting line (3) between the two supports (2).

2. Device according to one of the preceding claims,
**characterized in that**
the laser (4) is a line laser, wherein the extent of the line (6) produced by the laser (4) is preferably located at right angles to the connecting line (3) between the two supports (2) and at right angles to the beam axis (5) of the laser (4).

3. Device according to Claim 1,
**characterized in that**
a magnetic holder (8) is provided in order to fix the device detachably to the blade angle bearing (10).

4. Device according to one of the preceding claims,
**characterized in that**
the device comprises a battery, preferably a rechargeable battery, for supplying the laser (4) with electrical energy.

5. Device according to one of the preceding claims,
**characterized in that**
the support (2), the laser (4) and/or a compartment (9) for accommodating the battery are arranged in or on a housing (7), preferably made of plastic.

6. Method for blade pitch adjustment of a rotor blade of a wind energy installation by using a device (1) according to one of the preceding claims, comprising the steps:
a) attaching a device (1) with its supports (2) on a shell surface (11) of the blade angle bearing (10) of the rotor blade or a component connected thereto at a predefined position or in such a way that a laser beam originating from the device (1) strikes a hub mark (13) in the region of the side of the blade angle bearing (10) that is opposite the device (1);
b) fixing the device (1) in the predefined or found position; and
c) moving the rotor blade until the laser beam strikes a rotor blade mark (20) on the rotor blade.

7. Method according to Claim 6,
**characterized in that**
the hub mark (13) and the rotor blade mark (20) are a 0° mark.

8. Use of the device according to one of Claims 1 to 5 in a method according to one of Claims 6 to 7.

## Revendications

1. Dispositif (1) de réglage d'angle de pale des pales de rotor d'une éolienne, comprenant
- deux supports (2) espacés l'un de l'autre pour l'application du dispositif (1) contre une surface de coque (11) du palier d'angle de pale (10) d'une pale de rotor ou d'un composant connecté à celle-ci, de telle sorte que la ligne de connexion (3) entre les deux supports (2) forme une sécante de la surface de coque (11) située dans un plan perpendiculaire à l'axe (12) du palier d'angle de pale (10), et
- un laser (4) pour émettre un faisceau laser visible perpendiculairement à l'axe (12) du palier d'angle de pale (10), dont l'axe de faisceau (5) s'étend centralement et suivant un angle perpendiculaire à la ligne de connexion (3) entre les deux supports (2).

2. Dispositif selon l'une quelconque des revendications précédentes,
**caractérisé en ce que**
le laser (4) est un laser linéaire, l'étendue de la ligne (6) générée par le laser (4) étant de préférence perpendiculaire à la ligne de connexion (3) entre les deux supports (2) et perpendiculaire à l'axe du faisceau (5) du laser (4).

3. Dispositif selon la revendication 1,
**caractérisé en ce**
**qu'**il est prévu une fixation magnétique (8) pour fixer le dispositif de manière amovible au palier d'angle de pale (10).

4. Dispositif selon l'une quelconque des revendications précédentes,
**caractérisé en ce que**
le dispositif comprend une batterie, de préférence une batterie rechargeable, pour l'alimentation du laser (4) en énergie électrique.

5. Dispositif selon l'une quelconque des revendications précédentes,
**caractérisé en ce que**
les supports (2), le laser (4) et/ou un compartiment (9) pour recevoir la batterie sont disposés dans ou sur un boîtier (7), de préférence en plastique.

6. Procédé de réglage d'angle de pale d'une pale de rotor d'une éolienne, comprenant un dispositif (1) selon l'une quelconque des revendications précédentes, comprenant les étapes suivantes :
a) application d'un dispositif (1) avec ses supports (2) contre une surface de coque (11) du palier d'angle de pale (10) de la pale de rotor ou d'un composant connecté à celle-ci dans une position prédéfinie ou de telle sorte qu'un faisceau laser émis par le dispositif (1) parvienne sur un marquage de moyeu (13) dans la région du côté du palier d'angle de pale (10) opposé au dispositif (1) ;
b) fixation du dispositif (1) dans la position prédéfinie ou trouvée ; et
c) déplacement de la pale de rotor jusqu'à ce que le faisceau laser parvienne sur un marquage de palie de rotor (20) sur la pale de rotor.

7. Procédé selon la revendication 6,
**caractérisé en ce que**
le marquage de moyeu (13) et le marquage de pale de rotor (20) sont un marquage de 0°.

8. Utilisation d'un dispositif selon l'une quelconque des revendications 1 à 5 dans un procédé selon l'une quelconque des revendications 6 à 7.
